# EUROPEAN PATENT SPECIFICATION

(11) **EP 1 002 559 B1**
(45) Date of publication and mention of the grant of the patent: **07.12.2005**
(21) Application number: 99921158.4
(22) Date of filing: 13.05.1999
(51) Int. Cl.: A63F 9/02

(54) **GUN-SHAPED CONTROLLER**
PISTOLFÖRMIGER REGLER
ORGANE DE COMMANDE EN FORME DE PISTOLET

(30) Priority: 13.05.1998 JP 13086298; 08.10.1998 JP 28651398; 26.03.1999 JP 8500799
(43) Date of publication of application: 24.05.2000
(73) Proprietor: SEGA ENTERPRISES, LTD., Tokyo 144-0043 (JP)
(72) Inventor: OZAKI, Naoji, Ohta-ku, Tokyo 144-0043 (JP); SAKURAI, Tomoyuki, Ohta-ku, Tokyo 144-0043 (JP); OKUMURA, Yutaka, Ohta-ku, Tokyo 144-0043 (JP); MATSUURA, Junichiro, Ohta-ku, Tokyo 144-0043 (JP); KIDA, Makio, Ohta-ku, Tokyo 144-0043 (JP); SUMI, Masayuki, Ohta-ku, Tokyo 144-0043 (JP); HIROYOSHI, Akihito, Ohta-ku, Tokyo 144-0043 (JP); YOKOYAMA, Yutaka, Ohta-ku, Tokyo 144-0043 (JP)
(74) Representative: Brown, Kenneth Richard
(86) International application number: PCT/JP1999/002490
(87) International publication number: WO 1999/058214

(56) References cited:
- EP-A- 0 679 986
- WO-A1-97/32641
- JP-A- 4 040 977
- JP-A- 4 174 694
- JP-A- 5 177 058
- JP-A- 5 192 449
- JP-A- 6 180 748
- JP-A- 6 190 146
- JP-A- 6 198 075
- JP-A- 7 024 147
- JP-A- 7 073 343
- JP-A- 7 136 343
- JP-A- 7 178 242
- JP-A- 7 204 356
- JP-A- 7 313 731
- JP-A- 8 019 664
- JP-A- 8 089 661
- JP-A- 8 191 953
- JP-A- 8 206 359
- JP-A- 8 257 243
- JP-A- 9 161 095
- JP-A- 9 225 144
- JP-A- 10 033 831
- JP-A- 52 080 700
- JP-B2- 2 686 675
- US-A- 5 853 324
- A. DOUGLAS: "Time Crisis Review" [ONLINE], 11 November 1997 (1997-11-11), pages 1-3, XP002200685 Retrieved from the Internet: <URL:psx.ign.com/reviews/2126.html> [retrieved on 2000-03-31]
- JUGEMU, Vol. 4, No. 8, (Whole Number 40), (Japan), RECRUIT CO., LTD., (01-07-98), pages 26-27.

## Description

### Field of the Invention

The present invention generally relates to a gun-shaped controller to be connected to electronic devices such as a video game machine, and particularly to a gun-shaped controller suitable for being used in gun games whereby characters displayed on a monitor screen are shot as targets.

### Description of the Related Art

Pursuant to the diversification of video game software in recent years, various controllers-from conventional controllers having instruction buttons and cross-shaped keys to joystick-type controllers and gun-shaped controllers-are out on the market corresponding to the game software to be used. In JP-A-408191953 is shown an example of a gun-shaped controller. In JP Patent Publication No. 2686675, for example, disclosed is a gun-shaped controller, which is a model gun, for a gun game.

This gun-shaped controller for a gun game comprises a trigger lever similar to an actual gun to which a player' s finger is placed, and a light sensor for detecting the flashing light from a CRT screen is provided to the tip of this gun-shaped controller. When the player pulls the trigger lever of the controller, the CRT screen instantaneously becomes a white screen in order to detect the impact position and emits flashing light. This white screen is realized by raster scanning. When the raster light appears at the coordinate position on the CRT display indicated by the light sensor, the light sensor detects this light and the controller detects the impact position by reading the X-Y coordinates of the raster scanning at such time. The game machine thereby judges whether the impact position coincides with the shooting target, and the game is progressed in accordance with a hit or a miss.

As an operation means on the player's side in this type of gun-shaped controller for gun games, the present situation is that other than the trigger lever mentioned above, provided is merely a button or the like for starting the game. Therefore, the mainstream of gun games using this controller is an orthodox shooting game whereby a player directly shoots at targets on the monitor screen.

As a variation of this type of game, there is a shooting game where a character, such as a police officer, appears on the monitor screen in place of the player and successively shoots the enemies appearing on the screen. Nevertheless, this character is either fixed to a prescribed position within the screen or, even if it were able to move, the movement is predetermined by the program and the like. Thus, this type of game is also no better than a simple shooting game.

Accordingly, game devices employing these gun-shaped controllers are also no better than a simple shooting game, and therefore lack amusement.

### SUMMARY OF THE INVENTION

An object of the present invention is to provide a gun-shaped controller capable of increasing the variation of the game software to be used and performing highly amusing games.

Another object of the present invention is to provide a game device enabling a game development with enhanced amusement by employing the gun-shaped controller.

Still another obj ect of the present invention is to provide a game device enabling a virtual sensation in accordance with the situation during such game development.

The above objects are achieved by a gun-shaped controller according to claim 1.

### BRIEF DESCRIPTION OF THE DRAWINGS

Fig. 1 is an external view of a gun-shaped controller according to Embodiment 1 of the present invention;
Fig. 2 is an external view of a memory card with LCD and capable of being mounted on to the gun-shaped controller shown in Fig. 1;
Fig. 3 is a block-structure diagram of a control circuit of the gun-shaped controller shown in Fig. 1;
Fig. 4 is a partial cross section of a reload mechanism provided to the grip portion of the gun-shaped controller shown in Fig. 1;
Fig. 5 is an external view of the gun-shaped controller according to Embodiment 2 of the present invention;
Fig. 6 is an external view of the gun-shaped controller according to Embodiment 3 of the present invention;
Fig. 7 is an external view of the gun-shaped controller according to Embodiment 4 of the present invention;
Fig. 8 shows a gun-shaped controller according to Embodiment 5, and Figs. 8(a) through 8(c) are external views respectively showing a top, side, and rear thereof;
Fig. 9 shows the gun-shaped controller according to Embodiment 5, and Figs. 9(a) through 9(c) are external views respectively showing the bottom, side, and front thereof;
Fig. 10 shows an operation example of the gun-shaped controller shown in Fig. 8 and Fig. 9;
Fig. 11 shows an operation example of a conventional gun-shaped controller;

### DESCRIPTION OF THE PREFERRED EMBODIMENTS

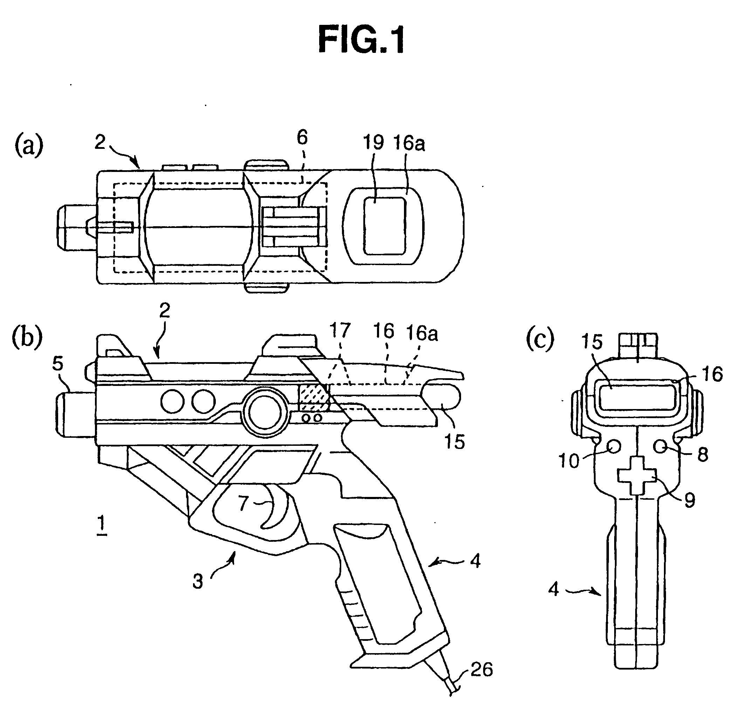

The gun-shaped controller according to Embodiment 1 of the present invention is now explained with reference to Figs. 1 through 4. Fig. 1 shows the exterior of a gun-shaped controller to be operated by a player and connected to a video game machine.

As shown in Fig. 1(a), the controller 1 is structured of a gun barrel 2 and a trigger 3 in order to imitate a gun.

An artificial retinal unit 5 for reading the game image from the monitor screen (not shown) is provided at the tip of the gun barrel. Prescribed image processing is performed on the game image read here and input to the controller circuit 6 (not shown in Fig. 1) explained later. A trigger lever 7 structuring the operation portion of the controller is mounted on the trigger 3 so as to be movable with respect to the controller and operable with the player's finger.

Moreover, the trigger lever 7 may be structured of a switch for outputting on/off or a switch for outputting analog values in accordance with the control input.

In the present embodiment with a gun-shaped controller structured as mentioned above, a start switch 8, a cross-shaped directional key 9 to be manually operated by a player as an operation key, and a reload switch 10 are provided to the upper part of the grip 4 of the controller 1, which corresponds to the hammer of an actual gun.

The start switch 8 is for turning on the functioning of the controller upon starting a game. The cross-shaped directional key 9 is similar to a cross-shaped directional key provided on a general game controller and is used for arbitrarily changing the direction of the character with the player's finger operation and moving the cursor to an arbitrary position on a selective screen. The reload switch 10 is used for loading bullets into a gun, which is conducted by a player pressing this reload switch.

The start switch 8, cross-shaped directional key 9, and reload switch 10 are connected to the controller circuit 6 as with the trigger lever 7, and the signals corresponding to the key operations are input to the control circuit.

Accordingly, the gun-shaped controller according to the present embodiment provides various operations from the player's side by incorporating, in addition to the trigger lever 7, a cross-shaped directional key 9 to be operated by the player. This enables complex operations in a gun game and not just simply shooting enemies appearing on the screen.

The player-side character, a police officer character for example, may be displayed separately on a small screen within the monitor screen, moved in an arbitrary direction with the operation of the cross-shaped directional key 9, and the arrangement of background and enemies of the main screen may be changed in accordance therewith. This enables compatibility with complex shooting game software. Moreover, options on characters and weapons to be used by the characters may be provided and arbitrarily selected with the operation of the cross-shaped directional key 9. Thus, this controller may be used for game software such as role-playing games and adventure games.

By providing a start switch 8, cross-shaped directional key 9, and reload switch 10 on the upper part of the grip of the controller 1, the player may, for example, operate the start switch 8, cross-shaped directional key 9, and reload switch 10 with his/her thumb while operating the trigger lever with his/her index finger. That is, a so-called single-handed action may be used in operating this gun-shaped controller.

As shown in Fig. 1 (c), the gun-shaped controller according to the present embodiment is provided with a slot 16 for inserting a below-described memory card with LCD, as a game peripheral, at the tail of the gun barrel of the controller. This slot 16 is formed along the lengthwise direction of the gun barrel, and a connector 17 to be connected to a memory card 15 is provided on the bottom thereof. A window 16a is formed on the upper part of this slot 16. From this window 16a, the LCD 19 of the memory card 15 inserted into this slot 16 can be viewed.

The memory card 15 is mounted on the gun-shaped controller and is used, for example, as a memory for storing the hit/miss information of the shooting from the gun-shaped controller or as an external display means for notifying the player of such results. In addition, this memory card 15 may be used as a simple game device even if removed from the controller 1 by loading a mini game thereinto.

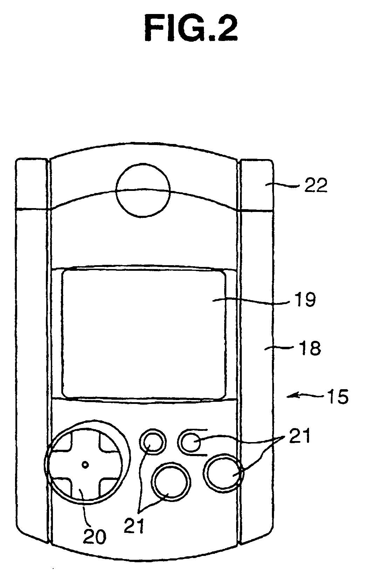

As shown in Fig. 2, this memory card 15 is provided with a small LCD portion 19 on the upper surface of its case 18. A cross-shaped directional key 20 and a plurality of operation buttons 21 are provided on the lower part thereof. When using the memory card 15 independently, it is possible to provide to the cross-shaped directional key 20 a selection key function and a save key function for inputting information and saving it in the memory. An external connection terminal (not shown) for connection with a connector 17 on the controller side is provided on the upper inner side of the case 18. This external connection terminal is ordinarily covered with a cap 22 for protection from dust and the like, and such cap is removed upon the terminal being connected to the gun-shaped controller.

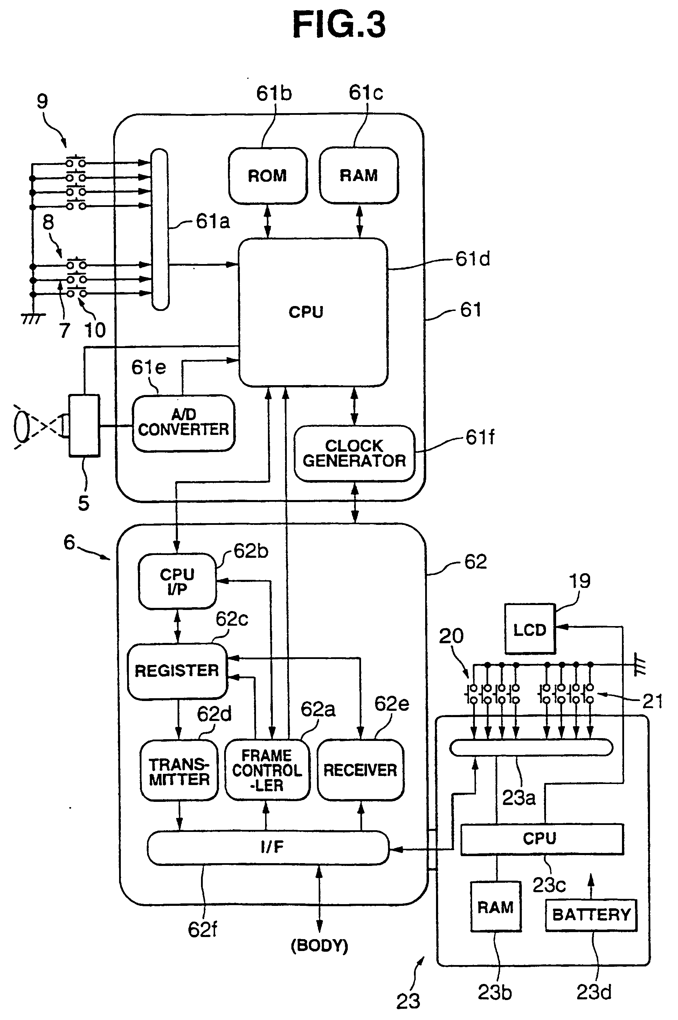

Fig. 3 is a block diagram of the structure of the controller circuit 6 to which the operation information of the aforementioned various operation portions, namely the trigger lever 7, start switch 8, cross-shaped directional key 9, and reload switch 10, from the player are input. This Fig. 3 is a block diagram of the structure whereby the memory card 15 has been mounted.

The controller circuit 6 is structured of a CPU 61 and a control unit 62, which is a gate alley. The CPU 61 is provided with, as a basic structure, a ROM 61b, RAM 61c, CPU 61d, and clock generator 61f. The CPU 61 is further provided with an input port 61a for inputting various operation signals from the trigger lever 7, start switch 8, and cross-shaped directional key 9, and an A/D converter 61e for converting analog image signals from the artificial retinal unit 5 into digital signals.

The control unit 62 connected to the CPU 61 comprises a frame controller 62a, CPU interface 62b, register 62c, transmitter 62d, receiver 62e, and interface 62f which structures an information input/output port between a game machine and a memory card 15.

The control circuit 23 of the memory card 15 is provided with, as a basic structure, a RAM 23b and CPU 23c. The control circuit 62 is further provided with an I/O port 23a for inputting various operation signals from the operation button 21 or LCD driving signals from the control circuit 6, and for outputting signals to the interface 62f of the LCD 19 and control circuit 6. The control circuit 23 and LCD 18 are driven with a battery 23d.

According to the present embodiment, as a connector 17 is provided to the controller 1 for the installation of the memory card, various functions, such as saving and loading the player data by using the memory, may be provided to the controller via the aforementioned memory card 15. Furthermore, by using the LCD 19 of the memory card 15, for example, it is possible to display a simple map or to represent the position of the enemy not appearing on the monitor screen. It is also possible to use a memory card with built-in speakers and output game sounds therefrom and not only from the monitor.

By this, it is possible to breakaway from conventional shooting games of merely aiming and shooting at targets and to provide variations to the game progress itself. The gun-shaped controller of the present embodiment is thus compatible with highly entertaining game software.

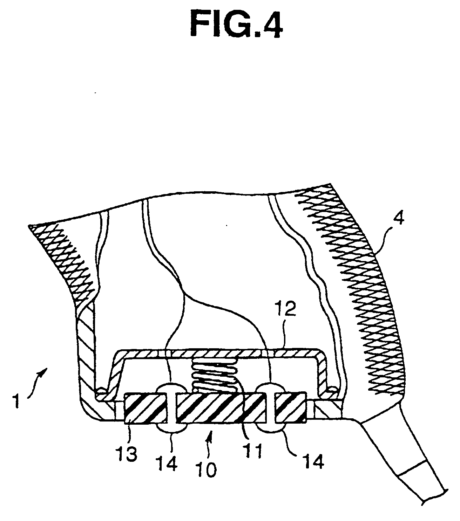

Although the gun-shaped controller according to the present embodiment is provided with a reload switch 10 for the player to reload bullets into a gun, as shown in Fig. 4, a reload unit 10, which is a virtual bullet-loading device using the contact sensor, may be provided on the grip 4.

As shown in Fig. 4, this reload unit 10 is structured of a sensor holder 13 supported by a unit case 12 via a spring 11 so as to be vertically movable with respect to the grip 4, and a pair of continuity-type contact sensors embedded under this holder 13. The continuity between the contact sensors is detected with the controller circuit 6.

By providing this type of reload unit 10 on the lower part of the grip 4 (at the butt of a gun), compatible game software may require the player to reload the bullets by hitting the butt of the gun with the palm of his/her hand upon running out of a prescribed number of ammunition.

Moreover, the game mode for which this unit 10 may be used is not limited to merely the contact/non-contact between the sensors, but may also be a type where the sensor continuity time of the player is counted, and the power or the number of loaded bullets is increased in proportion to the length of the continuity time. By this, for example, weapons such as the "Wave Motion Gun" of SF movies requiring an energy charge prior to firing may be used. It is therefore possible to provide a new type of amusement by being able to destroy all enemies on the screen with a single blast.

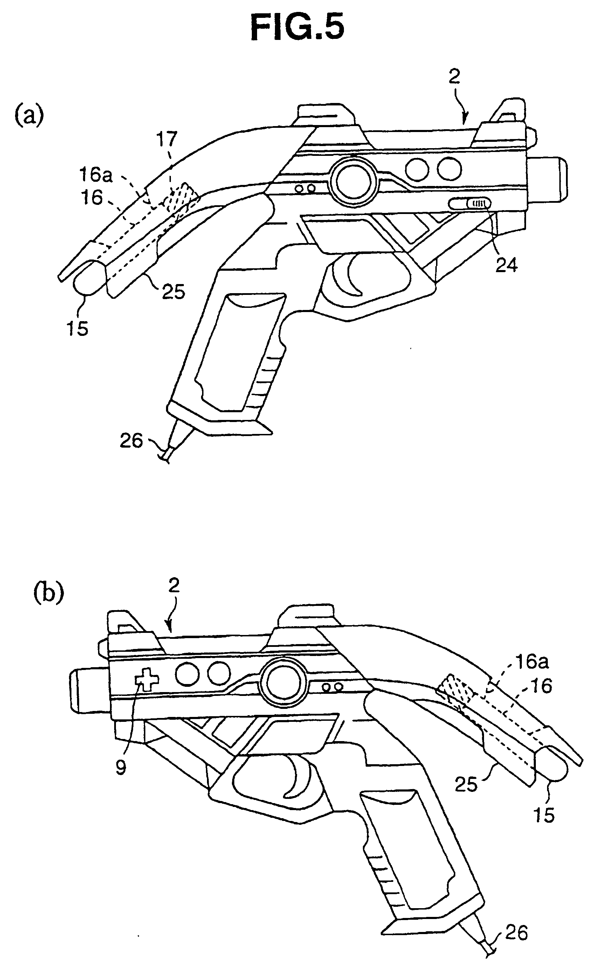

The gun-shaped controller according to Embodiment 2 of the present invention is now explained with reference to Fig. 5. Although the reload switch 10 is arranged at the upper part of the grip 4 of the controller 1 in aforementioned Embodiment 1, in the present embodiment, a reload lever 24 is established slidably with respect to the side of the gun barrel 2 of the controller 1 as shown in Fig. 5 (a). The player slides this reload lever 24 to reload bullets. In this case, the operation of the reload lever 24 by the player will be as though sliding a forearm of the gun barrel, in other words, it will be similar to an actual shooting action of pulling the sliding lever of an automatic-type gun.

Although the cross-shaped directional key 9 is provided at the upper part of the grip 4 in Embodiment 1, in the present embodiment, the cross-shaped directional key 9 is arranged on the side in the vicinity of the tip of the gun barrel 2 as shown in Fig. 5 (b). In this case, it is possible to operate the trigger lever 7 with one hand while operating the cross-shaped directional key 9 with the other hand, thereby enabling a secure operation of the gun-shaped controller with a double-handed action.

As shown in Figs. 5 (a) and 5(b), the position of the slot 16 for inserting the memory card 15 to be mounted on the controller 1 is structured such that the tail potion 25 of the gun-shaped controller itself is extended in a lower diagonal direction and the slot 16 is provided on this tail and the memory slot 15 may be mounted at a position near the player's side. In such case, it is easier for the player to view the LCD of the memory card 15.

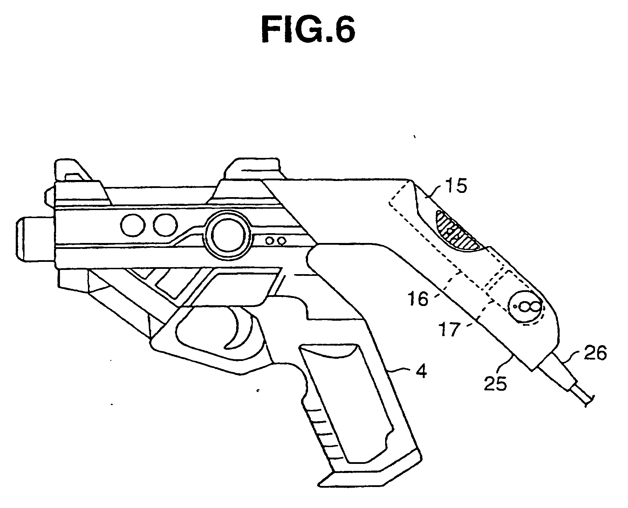

The gun-shaped controller according to Embodiment 3 of the present invention is now explained with reference to Fig. 6. Although the controllers of the aforementioned embodiments all have connector cables 26 for connection with the game machine extending from the lower part of the grip 4, in the present embodiment, such cables 26 are extending from the tip of the controller's tail 25 additionally provided in a lower diagonal direction. By this, interference between the reload unit 10 and the connector cable 26 of the grip 4 is avoided, and the reloading operation is improved.

In the gun-shaped controller according to the present embodiment, a connector 17 is provided at the lower part of the slot 16 to be mounted from the upper part of the memory card 15. The memory card 15 is inserted from the upper part of the slot 16 and is connected to the connector 17.

In Fig. 6, by securing the space between the tail 25 and the grip 4 as wide as possible, the freedom of the player's operation may be enhanced.

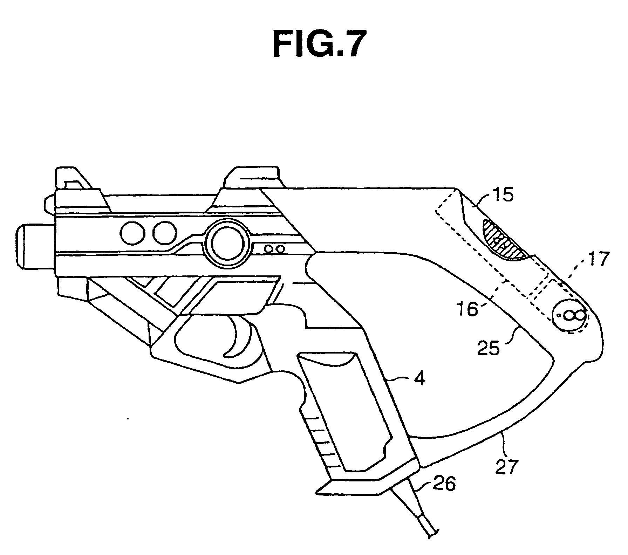

The gun-shaped controller according to Embodiment 4 of the present invention is now explained with reference to Fig. 7. In the present invention, the grip and the tail are linked with a bridge 27. By this, it is possible to reinforce the strength of the gun-shaped controller without interfering with the player's operation.

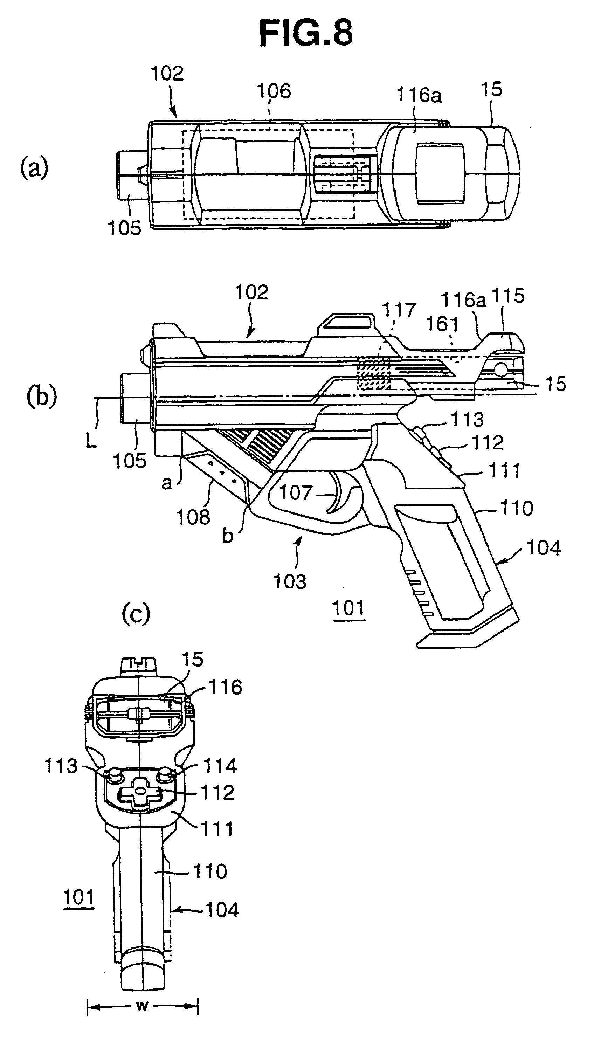

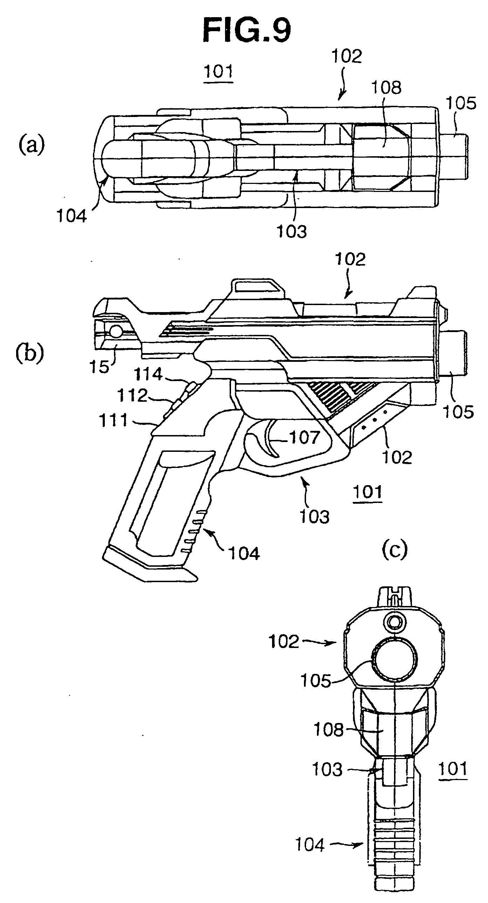

The gun-shaped controller according to Embodiment 5 of the present invention is now explained with reference to Figs. 8 through 10. These figures show the exterior view of the gun-shaped controller to be operated by a player and connected to a video game machine.

Similar to each of the aforementioned embodiments, the controller 1 in the present embodiment also imitates a gun by being structured of a gun barrel 102, trigger 103, and grip 4 as shown in Fig. 8(b).

An artificial retinal unit 105 for reading the game image from the monitor screen (not shown) is provided at the tip of the gun barrel 102. Prescribed image processing is performed on the game image read here and input to the built-in controller circuit 106. Explanation of the control circuit 106 is omitted as it is the same as the control circuit 6 described in Fig. 3. A trigger lever 107 structuring the operation portion of the controller is mounted on the trigger 103 so as to be movable with respect to the controller 101, and is operable with the player's finger. The single chain line shown as L in Fig. 8(b) is the lengthwise axis extending through the center of the artificial retinal unit 105 in the lengthwise direction of the gun barrel 102.

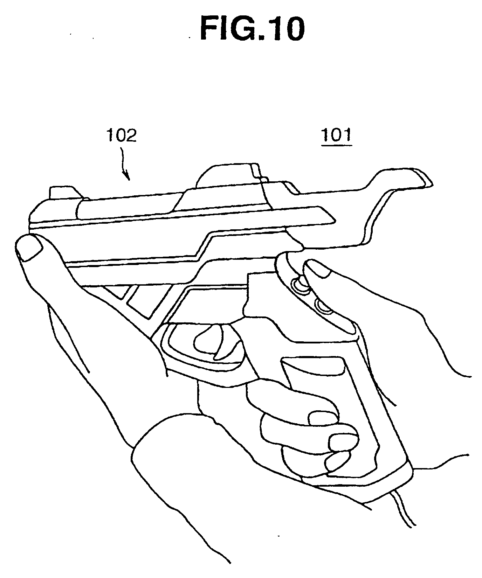

In the gun-shaped controller as structured above according to the present embodiment, the lower face 108 of the gun barrel 102 is structured diagonally with respect to the lengthwise axis L of the gun barrel, from the lower face position 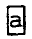 in the vicinity of the tip of the gun barrel to the connection point 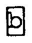 with the trigger 103. As shown in Fig. 10, for example, this structure is formed under the presumption that the player will hold the gun barrel 102 of the controller 101 with the other hand in order to improve the gun's 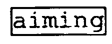 precision, and the holdability of the gun barrel itself is improved by inclining the lower face 108.

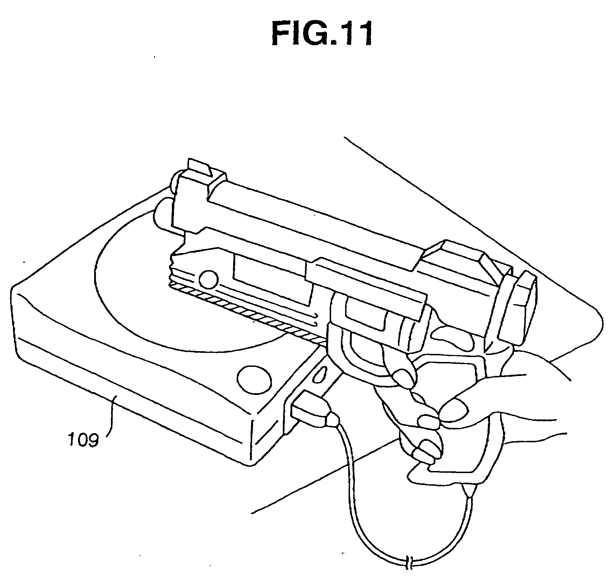

In order to improve the holdability, a player may shoot the gun while placing it directly on the video game machine 109 as shown in Fig. 11 (reference figure), which is not preferable in terms of the video game machine. By inclining the lower face 108 in the present embodiment, the object of avoiding this type of game play is also achieved.

Similar to the aforementioned embodiments, an operation face 111 is arranged on the upper part of the grip 104 of the controller 101 continuously to the rear face of the grip 104 and inclined toward the tip of the gun barrel rather than the rear face 110, and various buttons 113, 114 such as the cross-shaped directional key 112 and start button are provided thereto.

The cross-shaped directional key 112 is similar to a cross-shaped directional key provided on a general game controller and is used for arbitrarily changing the direction of the character with the player's finger operation and moving the cursor to an arbitrary position on a selective screen. Considering the operability of this cross-shaped directional key 112, when the controller 101 is positioned so that the lengthwise axis L of the gun barrel becomes horizontal, the key 112 is position higher than the tip of the trigger lever 107 and, as shown in Fig. 8(c), is positioned approximately in the center of the gun barrel direction shown with the arrow W when viewed from the rear of the gun.

The various buttons 113, 114 such as the start button are arranged to be symmetrical on the cross-shaped directional key 112 as positioned above. By this position relationship, when the player moves his/her subject of operation from the cross-shaped directional key 112 to the various operation buttons 113, 114 such as the start button, the muzzle of the gun naturally moves outside the screen (mainly downward) by the shift in finger movement pursuant thereto. As a result, it is possible to avoid erroneous operation of the controller, such as accidental shooting on the screen pursuant to the button operation, which often occurs with inexperienced players.

With respect to game functions furnished by these various operation buttons 113, 114 such as the start button, due to the reasons mentioned above, it is not preferable to assign frequently used functions thereto. From that viewpoint, the frequently used reload function, for example, may be achieved by the player shooting outside the screen as conventionally without depending on button operations.

The various operation buttons 113, 114 and the cross-shaped directional key 112 are, in the same manner as the trigger lever 107, connected to the controller circuit 106, and signals corresponding to key operations are input to the control circuit 106.

As with the aforementioned embodiments, a slot (mounting portion) 116 for inserting a memory card (memory device) 15 with LCD, as a game peripheral, is provided to the tail portion 115 of the gun barrel of the controller 101. This slot 116 is formed in the lengthwise axis L direction of the gun barrel 2, and a connector 117 for connection with the memory card 15 is provided at the bottom portion thereof. A window 116a is formed on the upper part of the slot 116. From this window 116a, the LCD indicator 19 of the memory card 15 inserted into the slot 116 can be viewed.

By extending the rear of the gun barrel and providing a slot 116 on the upper part of the cross-shaped directional key 112 as above, it is possible to avoid the muzzle of the gun from leaning downward as the centroid of the controller 101 moves toward the rear when the memory card is inserted.

As the upper part of the cross-shaped directional key 112 and the various operation buttons 113, 114 such as the start button are covered with the inserted memory card 15, the external appearance of the gun is not ruined. By providing a peripheral-mounting portion to the rear of the gun barrel 102, the player can easily insert the peripheral. In addition, when a peripheral such as a vibration pack is mounted, it is possible to more effectively vibrate the gun in comparison to if it were to be mounted on the front of the gun.

The present invention is not limited to the aforementioned embodiments and may be used in various other applications.

For example, although the shown controller 1, 101 is formed by imitating a short-nose type gun, it is not limited to such shape, and may be a normal-nose gun, or long-nose type guns such as shotguns and rifles.

### INDUSTRIAL APPLICABILITY

As mentioned above, according to the gun-shaped controller of the present invention, by forming a cross-shaped directional key 9, which is used as an operation key to be manually operated by an operator, integrally with the gun-shaped controller, enabled are complex movements such as moving the character on the screen or the character's visual field with this cross-shaped directional key in addition to the conventional action of shooting the targets on the screen. Thus, the gun-shaped controller is compatible with roll-playing games and adventure games. Moreover, provided is a gun-shaped controller capable of increasing the variation of the game software to be used and performing highly amusing games.

## Claims

1. A gun-shaped controller for supplying to an electronic amusement device a controlled variable representing the variation in the position of the controller (1) itself while it is held and operated by the player during the game play, **characterized in that** said controller comprises:
a gun barrel (2; 102);
a grip (4; 104) to be held by the player;
a trigger lever (7; 107) to be operated by the player, **characterized by**
means (9; 112) for supplying instruction signals to said amusement device for instructing directions, said means comprising a directional key arranged on the upper part of said grip at a position higher than at the least the tip of said trigger lever when the lengthwise axis of said gun barrel is horizontal, said directional key being arranged on a face (111) formed continuously to a rear face (110) of said grip and inclined toward the tip of the gun barrel (102), and said directional key being positioned approximately in the center of the widthwise direction of the gun when viewed from the rear of the gun.

2. A gun-shaped controller according to claim 1, wherein said instruction signals move an object displayed on said screen in a plurality of directions.

3. A gun-shaped controller according to claim 2, wherein said operation key is a cross-shaped directional key capable of moving the displayed object upward, downward, leftward, and rightward as said plurality of directions.

4. A gun-shaped controller according to claim 2 or claim 3, wherein said displayed object is a character or cursor displayed on said screen.

5. A gun-shaped controller according to any preceding claim, further comprising a contact sensor (10) for detecting the contact of the operator, a sensor holder (13) for movably mounting said contact sensor on the bottom of said grip, and a virtual bullet-loading portion for loading bullets virtually based on the contact state of the operator and said contact sensor.

6. A gun-shaped controller according to any of claims 1 to 4, further including a reload lever (24) provided to the side of said gun barrel and arranged so as to be slidable on the side of said gun barrel, and a virtual bullet-loading portion for virtually loading bullets with the operation of said reload lever.

7. A gun-shaped controller according to any preceding claim, further including a mounting portion (16; 116) for mounting a memory device (15).

8. A gun-shaped controller according to claim 7, wherein said memory device is provided with a display screen (19) for displaying information.

9. A gun-shaped controller according to claim 7 or claim 8, wherein said mounting portion is provided to a tail (115) protruding to the rear from said grip.

10. A gun-shaped controller according to any preceding claim, wherein a cable (26) is provided to the rear end of said grip.

11. A gun-shaped controller according to claim 9, wherein a cable is provided to the rear end of said tail.

12. A gun-shaped controller according to claim 1, wherein said gun-shaped controller is provided with a display screen (19) for displaying information.

13. A gun-shaped controller according to claim 1, wherein the lower face of said gun barrel (108) is formed diagonally with respect to the lengthwise axis of the gun barrel from the lower face of the vicinity of the tip of said gun barrel to the portion to be connected with said trigger.

14. A gun-shaped controller according to claim 13, wherein an operation button (8, 10; 113, 114) is provided to the upper part of said directional key.

15. A gun-shaped controller according to claim 1, wherein a mounting portion (16) for mounting a peripheral is formed in the lengthwise axis direction of the gun barrel at the rear of said gun barrel and positioned above said directional key.

16. A gun-shaped controller according to claim 15, wherein said peripheral is a memory device (15) comprising a display screen (19) for displaying information.

17. A gun-shaped controller according to any preceding claim, wherein said directional key is provided at a position where it can be easily operated with the thumb of the operator's hand holding said grip.

## Patentansprüche

1. Pistolenförmige Steuerung zur Lieferung einer Steuergröße an eine elektronische Unterhaltungs- bzw. Spielvorrichtung, wobei die Steuergröße die Veränderung der Position der Steuerung (1) selbst darstellt, während er von einem Spieler während der Spieldurchführung gehalten und betätigt wird, **dadurch gekennzeichnet, dass** die Steuerung Folgendes umfasst:
einen Pistolenlauf (2; 102);
einen Griff (4; 104 der von dem Spieler gehalten wird;
einen Auslöser (7; 107), der von dem Spieler betätigt wird, **gekennzeichnet durch**
Mittel (9; 112), um Befehlssignale an die Unterhaltungs- bzw. Spielvorrichtung zu liefern, um Richtungen anzuweisen, wobei die Mittel eine Richtungstaste umfassen, die am oberen Teil des Griffs an einer Position angeordnet ist, die höher als mindestens die Spitze des Auslösers ist, wenn die Längsachse des Pistolenlaufs horizontal ist, wobei die Richtungstaste an einer Fläche (111) ange ordnet ist, die mit einer rückwärtigen Fläche (110) des Griffs zusammenhängend aus gebildet und in Richtung der Spitze des Pistolenlaufs (102) geneigt ist, und wobei die Richtungstaste, bei Betrachtung von der Rückseite der Pistole aus, ungefähr in der Mitte der Breitenrichtung der Pistole angeordnet ist.

2. Pistolenförmige Steuerung nach Anspruch 1, wobei die Befehlssignale ein auf dem Bildschirm angezeigtes Objekt in mehrere Richtungen bewegen.

3. Pistolenförmige Steuerung nach Anspruch 2, wobei die Befehlstaste eine kreuzförmige Richtungstaste ist, die im Stande ist, das angezeigte Objekt nach oben, nach unten, nach links und nach rechts als die mehreren Richtungen zu bewegen.

4. Pistolenförmige Steuerung nach Anspruch 2 oder Anspruch 3, wobei das angezeigte Objekt eine auf dem Bildschirm angezeigte Figur oder ein auf dem Bildschirm angezeigter Cursor ist.

5. Pistolenförmige Steuerung nach einem der vorhergehenden Ansprüche, der ferner einen Berührungssensor (10) zum Erfassen der Berührung des Bedieners, eine Sensorhaltevorrichtung (13) für eine bewegliche Anbringung des Berüh rungssensors an der Unterseite des Griffs, und einen virtuell Patronen ladenden Abschnitt für ein virtuelles Laden von Patronen basierend auf dem Be rührungszustand des Bedieners und des Berührungssensors umfasst.

6. Pistolenförmige Steuerung nach einem der Ansprüche 1 bis 4, der ferner einen Nachladehebel (24), der auf Seiten des Pistolenlaufs vorgesehen ist und derart angeordnet ist, dass er auf der Seite des Pistolenlaufs gleitfähig ist, und einen virtuell Patronen ladenden Abschnitt für ein virtuell es Laden von Patronen bei Betätigung des Nachladehebels aufweist.

7. Pistolenförmige Steuerung nach einem der vorhergehenden Ansprüche, der ferner einen Einbauabschnitt (16, 116) für einen Einbau einer Speichervorrichtung (15) umfasst.

8. Pistolenförmige Steuerung nach Anspruch 7, wobei die Speichervorrichtung mit einem Bildschirm (19) für die Anzeige von Informationen versehen ist.

9. Pistolenförmige Steuerung nach Anspruch 7 oder Anspruch 8, wobei der Einbauabschnitt an einem Rumpfende (115) vorgesehen ist, das von dem Griff nach hinten übersteht.

10. Pistolenförmige Steuerung nach einem der vorhergehenden Ansprüche, wobei ein Kabel (26) zum hinteren Ende des Griffs vorgesehen ist.

11. Pistolenförmige Steuerung nach Anspruch 9, wobei ein Kabel zum hinteren Ende des Rumpfendes vorgesehen ist.

12. Pistolenförmige Steuerung nach Anspruch 1, wobei die pistolenförmige Steuerung mit einem Bildschirm (19) für die Anzeige von Informationen versehen ist.

13. Pistolenförmige Steuerung nach Anspruch 1, wobei die Unterseite des Pistolenlaufs (108) diagonal in Bezug auf die Längsachse des Pistolenlaufs von der Unterseite in der Umgebung der Spitze des Pistolenlaufs zu dem Abschnitt, der mit dem Auslöser zu verbinden ist, ausgebildet ist.

14. Pistolenförmige Steuerung nach Anspruch 13, wobei ein Bedienknopf (8, 10; 113, 114) am oberen Teil der Richtungstaste vorgesehen ist.

15. Pistolenförmige Steuerung nach Anspruch 1, wobei ein Einbauabschnitt (16) für einen Einbau einer peripheren Einheit in Längsachsenrichtung des Pistolenlaufs an der Rückseite des Pistolenlaufs ausgebildet und über der Richtungstaste angeordnet ist.

16. Pistolenförmige Steuerung nach Anspruch 15, wobei die periphere Einheit eine Speichervorrichtung (15) ist, die einen Bildschirm (19) für die Anzeige von Informationen umfasst.

17. Pistolenförmige Steuerung nach einem der vorhergehenden Ansprüche, wobei die Richtungstaste an einer Position vorgesehen ist, an der sie leicht mit dem Daumen der Hand des Bedieners, die den Griff hält, betätigt werden kann.

## Revendications

1. Elément de commande en forme de pistolet pour envoyer à un dispositif électronique de divertissement une variable commandée représentant la variation de la position de l'élément de commande (1) lui-même, alors qu'il est tenu et actionné par le joueur pendant le déroulement du jeu, **caractérisé en ce que** ledit élément de commande comprend :
un canon (2;102);
une poignée (4;104) destinée à être tenue par le joueur;
un levier de détente (7;107) devant être actionné par le joueur;
**caractérisé par**
des moyens (9;112) pour envoyer des signaux d'instruction audit dispositif de divertissement pour commander des directions, lesdits moyens comprenant une touche directionnelle disposée sur la partie supérieure de ladite poignée dans une position située à un niveau plus élevé qu'au moins la pointe dudit levier de détente lorsque l'axe longitudinal dudit canon du pistolet est horizontal, ladite touche directionnelle étant disposée sur une face (111) formée continûment sur une face arrière (110) de ladite poignée et inclinée en direction de la pointe du canon (102) du pistolet, et ladite touche directionnelle étant positionnée approximativement au centre de l'étendue en largeur du canon, vu à partir de l'arrière du pistolet.

2. Elément de commande en forme de pistolet selon la revendication 1, dans lequel lesdits signaux de commande déplacent un objet affiché sur ledit écran dans une pluralité de directions.

3. Elément de commande en forme de pistolet selon la revendication 2, dans lequel ladite touche d'actionnement est une touche directionnelle cruciforme apte à déplacer l'objet affiché vers le haut, vers le bas, vers la gauche et vers la droite, constituant ladite pluralité de directions.

4. Elément de commande en forme de pistolet selon la revendication 2 ou la revendication 3, dans lequel ledit objet affiché est un caractère ou un curseur affiché sur ledit écran.

5. Elément de commande en forme de pistolet selon l'une quelconque des revendications précédentes, comprenant en outre un capteur de contact (10) pour détecter le contact de l'opérateur, un support (13) du capteur permettant le montage avec possibilité de déplacement dudit capteur de contact sur la partie inférieure de ladite poignée, et une partie de chargement virtuel de balles pour la chargement de balles basées virtuellement sur l'état de contact de l'opérateur et le capteur de contact.

6. Elément de commande en forme de pistolet selon l'une quelconque des revendications 1 à 4, comprenant en outre un levier de rechargement (24) prévu sur le côté dudit canon du pistolet et agencé de manière à pouvoir glisser sur le côté dudit canon du pistolet, et une partie de chargement virtuel de balles pour charger virtuellement des balles avec l'actionnement dudit levier de rechargement.

7. Elément de commande en forme de pistolet selon l'une quelconque des revendications précédentes, comprenant en outre une partie de montage (16;116) pour le montage d'un dispositif de mémoire (15).

8. Elément de commande en forme de pistolet selon la revendication 7, dans lequel ledit dispositif de mémoire est pourvu d'un écran d'affichage (19) pour l'affichage d'une information.

9. Elément de commande en forme de pistolet selon la revendication 7 ou la revendication 8, dans lequel ladite partie de montage est prévue sur une partie arrière (115) qui fait saillie en arrière à partir de ladite poignée.

10. Elément de commande en forme de pistolet selon l'une quelconque des revendications précédentes, dans lequel un câble (26) est prévu sur l'extrémité arrière de ladite poignée.

11. Elément de commande en forme de pistolet selon la revendication 9, dans lequel un câble est prévu sur l'extrémité arrière de ladite partie arrière.

12. Elément de commande en forme de pistolet selon la revendication 1, dans lequel ledit élément de commande en forme de pistolet est équipé d'un écran d'affichage (19) pour l'affichage d'une information.

13. Elément de commande en forme de pistolet selon la revendication 1, dans lequel la face inférieure dudit canon (108) du pistolet est formée en diagonale par rapport à l'axe longitudinal du canon du pistolet depuis la face inférieure de la zone voisine de la pointe dudit canon du pistolet jusqu'à la partie devant être raccordée à ladite détente.

14. Elément de commande en forme de pistolet selon la revendication 13, dans lequel un bouton d'actionnement (8,10; 113;114) est prévu sur la partie supérieure de ladite touche directionnelle.

15. Elément de commande en forme de pistolet selon la revendication 1, dans lequel une partie de montage (16) pour le montage d'un périphérique est formée dans la direction de l'axe longitudinal du canon du pistolet sur l'arrière dudit canon du pistolet et positionnée au-dessus de ladite touche directionnelle.

16. Elément de commande en forme de pistolet selon la revendication 15, dans lequel ledit périphérique est un dispositif de mémoire (15) comprenant un écran d'affichage (19) pour l'affichage d'une information.

17. Elément de commande en forme de pistolet selon l'une quelconque des revendications précédentes, dans lequel ladite touche directionnelle est prévue dans une position, dans laquelle elle peut être actionnée aisément par le pouce de la main de l'opérateur tenant ladite poignée.
